(19) Europäisches Patentamt
European Patent Office
Office européen des brevets

(11) **EP 2 012 100 B1**

(12) **FASCICULE DE BREVET EUROPEEN**

(45) Date de publication et mention
de la délivrance du brevet:
**14.11.2012 Bulletin 2012/46**

(51) Int Cl.:
***G01J 5/22*** *(2006.01)*      ***H04N 5/33*** *(2006.01)*
***H04N 5/335*** *(2011.01)*

(21) Numéro de dépôt: **08300224.6**

(22) Date de dépôt: **17.06.2008**

(54) **Dispositif de détection de rayonnement infrarouge à détecteurs bolométriques**

Vorrichtung zum Erfassen von Infrarotstrahlung mit Hilfe von bolometrischen Detektoren

Device for detecting infrared radiation using bolometric detectors

(84) Etats contractants désignés:
**DE FR GB IT SE**

(30) Priorité: **02.07.2007 FR 0756214**

(43) Date de publication de la demande:
**07.01.2009 Bulletin 2009/02**

(73) Titulaire: **ULIS**
**38113 Veurey Voroize (FR)**

(72) Inventeurs:
• **Dupont, Benoît**
**38000, GRENOBLE (FR)**
• **Legras, Olivier**
**38500, VOIRON (FR)**

(74) Mandataire: **Vuillermoz, Bruno**
**Cabinet Laurent & Charras**
**B.P. 32**
**20, rue Louis Chirpaz**
**69134 Ecully Cédex (FR)**

(56) Documents cités:
**EP-A- 1 117 250**

• **TROUILLEAU C ET AL: "35 mu m pitch at ULIS, a breakthrough" PROCEEDINGS OF THE SPIE, SPIE, BELLINGHAM, VA, US, vol. 5873, no. pt II, 2005, pages 578-585, XP007904056 ISSN: 0277-786X**

**Description**

**DOMAINE DE L'INVENTION**

La présente invention concerne un dispositif de détection de rayonnement infrarouge mettant en oeuvre des détecteurs bolométriques. Elle trouve notamment son domaine d'application dans l'imagerie infrarouge.

**ETAT ANTERIEUR DE LA TECHNIQUE**

Dans le domaine des détecteurs infrarouges, il est connu d'utiliser des dispositifs agencés sous forme matricielle, et susceptibles de fonctionner à température ambiante, c'est-à-dire ne nécessitant pas de refroidissement à de très basses températures, contrairement aux dispositifs de détection appelés "détecteurs infrarouge quantiques" qui eux, nécessitent un fonctionnement à très basse température, typiquement celle de l'azote liquide.

Ces détecteurs non refroidis utilisent traditionnellement la variation d'une grandeur physique d'un matériau approprié, en fonction de la température, au voisinage de 300K. Dans le cas des détecteurs bolométriques, cette grandeur physique est la résistivité électrique.

Un tel détecteur non refroidi associe généralement :

- des moyens d'absorption du rayonnement infrarouge et de conversion de celui-ci en chaleur;
- des moyens d'isolation thermique du détecteur, de telle sorte à permettre à celui-ci de s'échauffer sous l'action du rayonnement infrarouge à détecter ;
- des moyens de thermométrie qui, dans le cadre d'un détecteur bolométrique, mettent en oeuvre un élément résistif ;
- et des moyens de lecture des signaux électriques fournis par les moyens de thermométrie.

Les détecteurs destinés à l'imagerie infrarouge sont classiquement réalisés sous la forme d'une matrice de détecteurs élémentaires selon une ou deux dimensions, ladite matrice étant formée de manière dite "monolithique" ou reportée sur un substrat généralement réalisé en silicium, dans lequel sont constitués des moyens d'adressage séquentiel des détecteurs élémentaires et des moyens d'excitation électrique et de pré-traitement des signaux électriques générés par ces détecteurs élémentaires. Ces moyens d'adressage séquentiel, d'excitation électrique et de pré-traitement sont donc formés sur le substrat et constituent un circuit de lecture.

Pour obtenir une scène par l'intermédiaire de ce détecteur, on projette la scène à travers une optique adaptée sur la matrice de détecteurs élémentaires, chacun d'entre eux constituant un point image ou pixel, et des stimuli électriques cadencés sont appliqués par l'intermédiaire du circuit de lecture à chacun des détecteurs élémentaires, ou à chaque rangée de tels détecteurs, afin d'obtenir un signal électrique constituant l'image de la température atteinte par chacun desdits détecteurs élémentaires. Ce signal est traité de manière plus ou moins élaborée par le circuit de lecture, puis éventuellement par un dispositif électronique extérieur au boîtier afin de générer l'image thermique de la scène observée.

La difficulté essentielle de mise en oeuvre des détecteurs bolométriques réside dans la très faible variation relative de leur résistance électrique, représentative des variations locales de température d'une scène observée, par rapport à la valeur moyenne de ces résistances.

La présence par construction d'une résistance thermique finie entre le bolomètre et le substrat, implique que la température du bolomètre est influencée par la température du substrat, et ceci de manière beaucoup plus sensible que les variations de température dues au flux incident, qui seules sont à prendre en considération du point de vue signal à détecter. Les fluctuations résiduelles de température du substrat, dans des conditions ordinaires de stabilisation thermique, *a fortiori* si le détecteur est exempt d'un tel système de stabilisation thermique, situation de plus en plus fréquente dans ce type de détecteurs afin d'en diminuer le coût, produisent en conséquence sur le signal issu du bolomètre une composante inutile, qui nuit à la qualité du signal. Pour éviter ou au moins limiter cet effet, le substrat est traditionnellement régulé thermiquement.

De plus, des structures dites « de compensation » sont mises en oeuvre pour atténuer les effets de la température du plan focal sur la réponse du circuit. Ces structures, usuellement des bolomètres dits « aveugles », c'est-à-dire insensibles au flux optique incident, mais sensibles à la température du substrat, sont utilisées pour générer un courant dit de compensation, qui est soustrait du courant issu des bolomètres d'imagerie, c'est à dire des bolomètres de détection, grâce à la configuration du circuit électronique.

Typiquement, ces structures de compensation sont construites de façon à présenter une résistance thermique très faible par rapport au substrat, contrairement aux bolomètres d'imagerie.

De cette manière, l'essentiel du courant dit « de mode commun », c'est à dire non représentatif des informations provenant de la scène à détecter, est éliminé.

Par ailleurs et avantageusement, les structures de compensation étant essentiellement à la température du circuit de lecture, et donc du plan focal, on obtient directement une réjection notable des éventuelles fluctuations de température de ce dernier. Il est connu de disposer ces structures de compensation « à l'identique » de manière répétitive dans chaque colonne de la matrice, de manière à limiter la complexité et l'encombrement total du circuit.

Chaque colonne de bolomètres est séquentiellement compensée, lors du balayage électronique ligne par ligne de l'image, à l'aide d'une même structure de compensation. Les structures de compensation présentent cependant, naturellement, une dispersion spatiale de résistance, liée aux procédés technologiques mis en oeuvre dans leur élaboration (qui relèvent habituellement de l'industrie du semi-conducteur).

En outre, les bolomètres aveugles, tout comme les bolomètres d'imagerie, ainsi que certaines fonctions du circuit de lecture, présentent des phénomènes de bruit en général, et de bruit dit « en 1/f » en particulier. Le bruit en 1/f est typiquement la source d'une dérive basse fréquence, et particulièrement très basse fréquence, du niveau de sortie des capteurs, qui nuit à la qualité de l'imageur. Il résulte de la disposition par colonne de la compensation, un impact négatif sur la qualité de l'image, à cause des variations basse fréquence, asynchrones entre colonnes, du signal compensé. Outre les éventuelles dispositions de conception et de mise en oeuvre particulières déployées pour réduire cette dispersion, des algorithmes de compensation doivent en général être développés et appliqués en sortie d'imageur afin d'améliorer la qualité d'image.

Les circuits de lecture pour capteurs à bolomètres résistifs exploitant des bolomètres aveugles ont été décrits, par exemple dans les publications suivantes :

- « Uncooled amorphous silicon technology enhancement for 25 μm pixel pitch achievement », E. MOTTIN et al ; Infrared Technology and Applications XXVIII, SPIE Vol. 4820 ;
- "320 x 240 uncooled microbolometer 2D array for radiometric and process control applications" B. FIEQUE et al; Optical Systems Design Conference, SPIE 5251, Sept 29 ;
- "Low cost amorphous silicon based 160 x 120 uncooled microbolometer 2D array for high volume applications" C. TROUILLEAU et al; Optical Systems Design Conference SPIE 5251-16.
- "35 μm pitch at ULIS, a breaktrough", Trouilleau et al., SPIE vol. 5783, 2005.

De plus, des matrices de détecteurs employant une unique structure de compensation pour un grand nombre de pixels sont décrites dans EP 1117250.

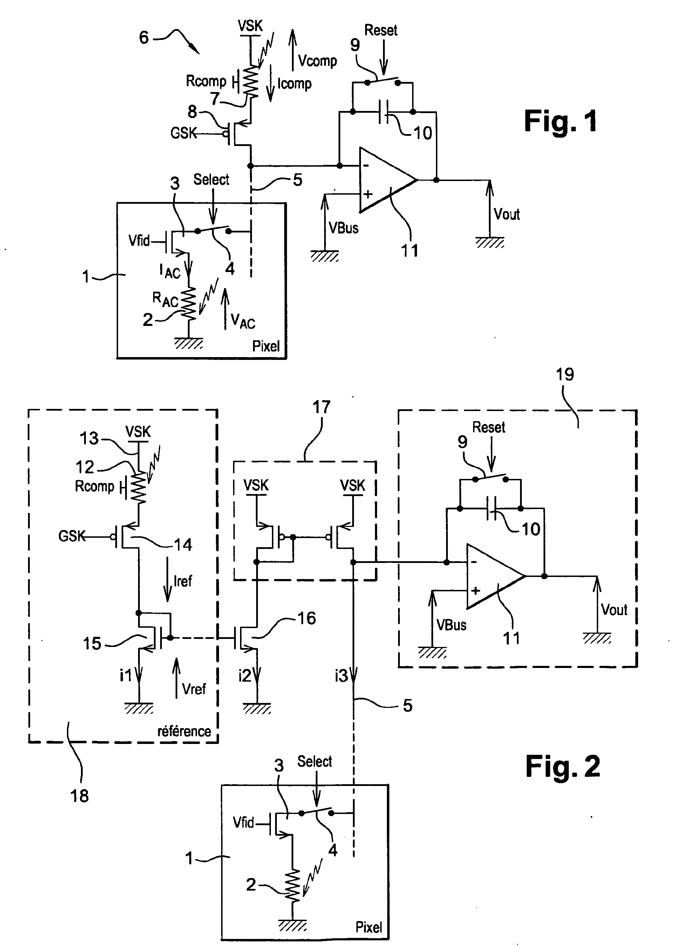

On a représenté schématiquement en relation avec la figure 1 le principe de lecture d'une matrice active de bolomètres.

Le pixel **1** (le terme « pixel » doit s'entendre par extension comme l'ensemble des structures disposées dans l'emprise d'un point élémentaire de détection) comporte un bolomètre actif **2,** un transistor NMOS d'injection **3** et un interrupteur **4** reliant le pixel **1** à la colonne de lecture **5,** représentée ici en pointillé. La structure de compensation **6,** également dénommée d'ébasage, selon une autre terminologie du domaine technique considéré, comporte un bolomètre aveugle **7** relié à une alimentation VSK et un transistor PMOS d'injection **8.** En mode de fonctionnement nominal, le PMOS fonctionne en régime saturé. Le courant $I_{Comp}$, qui circule dans la branche de compensation, est défini par l'expression :

$$Icomp = \frac{Vcomp}{Rcomp}$$

expression dans laquelle :

- Vcomp désigne la tension aux bornes du bolomètre de compensation **7 ;**
- Rcomp désigne la résistance dudit bolomètre de compensation.

Le courant circulant dans la branche active, qui comporte le transistor NMOS d'injection **3** s'exprime par la relation :

$$Iac = \frac{Vac}{Rac}$$

dans laquelle :

- Iac désigne le courant de la branche active ;

- Vac désigne la tension aux bornes du bolomètre actif **2** ;
- Rac désigne la résistance dudit bolomètre actif.

Les tensions de polarisation des transistors MOS d'injection sont choisies pour qu'en l'absence de flux de scène incident, c'est à dire par exemple lorsque l'on obture optiquement le système, la différence de courant di = $I_{comp}$-$I_{ac}$ entre la branche active et la branche aveugle de compensation soit sensiblement nulle.

Lorsque l'on souhaite lire un bolomètre actif, l'opération se déroule en deux phases. La première phase consiste à actionner l'interrupteur de remise à zéro « Reset » **9** court-circuitant la capacité d'intégration **10** de l'amplicateur opérationnel **11.** On a alors :

$$Vout = Vbus$$

La colonne de lecture en pointillé **5** est donc portée au potentiel $V_{BUS}$. Ensuite on ouvre l'interrupteur « Reset » **9** et on ferme l'interrupteur de sélection « Select » **4** connectant le pixel **1** à la colonne de lecture **5**. La différence de courant dI est alors intégrée sur une capacité **C**int **10** durant un temps d'intégration fini $T_{int}$. L'intégration produit un niveau de sortie en tension de « Niveau Continu » ou **NC,** dans le cas de référence où l'on observe une scène à température uniforme, qui révèle typiquement les dispersions de la matrice d'imagerie. C'est le mode de caractérisation standard de lecture des bolomètres actifs.

$$NC = V_{BUS} - \frac{T_{\text{int}}}{C_{\text{int}}} dI$$

La polarisation des bolomètres est choisie de telle sorte à assurer à la fois une bonne dynamique du signal de sortie et une compensation efficace.

Une expression plus rigoureuse serait obtenue en considérant pour le dernier terme l'intégrale sur Tint de la fonction dI(t), car les courants $I_{ac}$ et $I_{comp}$ ne sont pas constants. Cependant, pour la clarté de l'exposé, l'expression ci-dessus suffit à expliciter les paramètres à prendre en considération.

Ce système de lecture présente certaines limitations liées à la reproduction du motif de compensation par colonne sur le circuit de lecture. En effet chaque colonne dispose d'un bolomètre de compensation et de son transistor PMOS d'injection. La reproduction imparfaite de ces différents éléments d'une colonne sur l'autre, inhérente aux dispersions spatiales intrinsèques des technologies de construction mises en oeuvre, engendre une dispersion dans l'efficacité de la compensation. Ces dispersions statistiques se traduisent par un courant de compensation non uniforme d'une colonne à l'autre, faisant apparaître des contrastes colonnaires visibles, affectant ainsi le signal disponible.

La dispersion $\Delta R_{comp}$ sur la résistance $R_{comp}$ se traduit par une variation de courant de la forme :

$$\frac{\partial Icomp}{\partial Rcomp} = \frac{Vcomp}{Rcomp^2} \Rightarrow \Delta Ibolo = -\frac{Vcomp}{Rcomp^2} \cdot \Delta Rcomp$$

Le courant de compensation peut également s'exprimer en fonction de l'équation du courant dans le MOSFET d'injection selon l'expression suivante :

$$Icomp = \frac{\mu_p C_{ox}}{2} \cdot \frac{W_p}{L_p} (V_{SGP} - V_{thp})^2$$

expression dans laquelle :

- $\mu_p$ désigne la mobilité des porteurs positifs ;
- $C_{ox}$ désigne la capacité d'oxyde de grille ;
- $W_p$ désigne la largeur du canal du PMOS ;

- $L_p$ désigne la longueur du canal du PMOS ;
- $V_{SGP}$ désigne la tension de grille du PMOS ;
- $V_{thP}$ désigne la tension de seuil du PMOS.

De nombreux paramètres peuvent varier dans cette équation, engendrant une non-uniformité colonnaire du courant de compensation. Naturellement, les paramètres lithographiques $W_p$ et $L_p$ d'une colonne sur l'autre impliquent des différences de courant. La fluctuation de longueur du canal constitue également l'une des causes possibles de cette non-uniformité. Il existe des techniques connues de l'homme du métier afin de limiter ces dispersions.

En revanche, la dispersion de tension de seuil $V_{thP}$ pose problème. Si on suppose une variation $\delta Vth$ de tension de seuil, la variation colonnaire de courant peut alors s'exprimer de la façon suivante :

$$\dot{\delta Icomp} = \frac{\mu_p C_{ox}}{2} \cdot \frac{W_p}{L_p} \delta V_{thp} \left( 2\sqrt{\frac{Icomp}{\frac{\mu_p C_{ox}}{2} \cdot \frac{W_p}{L_p}}} + \delta V_{thp} \right)$$

Outre ces dispersions statiques, le circuit représenté sur la figure 1 est également sensible aux fluctuations basses fréquences liées au bruit « en 1/f ». La puissance de bruit « en 1/f » développée entre deux fréquences $f_{min}$ et $f_{max}$ s'exprime par intégration de la densité spectrale de bruit entre ces deux bornes, selon la relation :

$$Icomp^2 = \int_{f\min}^{f\max} \frac{4k_B T}{R} \frac{R \cdot Vcomp^2}{R \cdot f} df = \frac{4k_B T}{R} \frac{K_F \cdot R \cdot Vcomp^2}{R} \ln\left(\frac{f\max}{f\min}\right)$$

où :

- $k_B$ est la constante de Boltzmann ;
- $K_F$ désigne le coefficient de bruit en 1/f du matériau.

La puissance de bruit apportée par la structure de compensation, telle qu'exprimée par la relation ci-dessus, augmente d'un incrément constant pour chaque décade de fréquence supplémentaire comprise entre les deux bornes d'intégration $f_{min}$ et $f_{max}$. Or, les bolomètres de compensation sont polarisés en permanence, donc la borne inférieure de fréquence $f_{min}$ de l'intégration peut donc être considérée très basse, dans la mesure où le composant reste sous tension sur une période prolongée, une fois le détecteur activé. Les perturbations par colonne (exprimées par l'homme du métier de manière analytique par la puissance de bruit ci-dessus) se manifestent comme un *«offset»* ou décalage, au premier ordre invariant d'une image sur l'autre, si l'on considère les fréquences inférieures à la fréquence trame, mais variable sur une période de temps plus étendue, lorsque la caméra intégrant un tel détecteur est en fonctionnement depuis plusieurs minutes.

Outre cette limitation, la tendance du marché vers une augmentation du nombre de points des capteurs bolométriques, fait que les bolomètres de compensation de chaque colonne, efficaces sur de petits imageurs comme référence absolue de température, agissent comme des références « locales » de températures, du point de vue des bolomètres actifs les plus éloignés. Ainsi, si une source thermique d'origine quelconque, par exemple des éléments de circuiterie localement plus ou moins dissipatifs, peut influencer tout ou partie des bolomètres de compensation, ces derniers seront influencés en relation avec leur éloignement de la source de perturbation, et reproduisent ainsi une distribution de courant de compensation inadaptée aux dispersions de température du substrat vues par les bolomètres sensibles, non concernés, ou en général de manière différente, par ladite source thermique.

La présente invention vise un dispositif de détection mettant en oeuvre une unique structure de compensation, et permettant de s'affranchir des limitations de qualité des images, notamment liées aux différences de contraste colonnaires et aux dispersions spatiales des structures électroniques élémentaires distribuées dans chaque colonne.

**EP 2 012 100 B1**

## EXPOSE DE L'INVENTION

Ce dispositif de détection infrarouge comprend les caractéristiques de la revendication 1.

En d'autres termes, l'intégralité de la matrice de bolomètres est compensée par une structure unique, permettant ainsi d'éviter les contrastes colonnaires observables avec les détecteurs de l'état antérieur de la technique.

Selon l'invention, les moyens de production du courant de référence comportent :

- une ligne d'alimentation connectée à l'une des bornes dudit bolomètre aveugle ;
- un transistor d'injection, connecté à l'autre borne dudit bolomètre aveugle, de manière à imposer le courant de référence via une tension appliquée sur sa grille ;
- un convertisseur courant - tension convertissant ledit courant de référence en une tension de référence.

Selon l'invention, le bolomètre aveugle peut être constitué d'un ou plusieurs bolomètres aveugles élémentaires connectés ensemble. Ce ou ces bolomètres aveugles sont réalisés de manière similaire aux bolomètres actifs, mais présentent une résistance thermique négligeable par rapport au substrat.

Selon l'invention, les moyens de copie simultanée pour chaque colonne de la matrice dudit courant de référence sont constitués par des miroirs de courant disposés dans chacune desdites colonnes, lesdits miroirs comportant chacun un convertisseur tension - courant.

Selon l'invention, le miroir de courant mis en oeuvre dans chacune des colonnes est un miroir de courant différentiel.

## BREVE DESCRIPTION DES FIGURES

La manière de réaliser l'invention et les avantages qui en découlent ressortiront mieux des exemples de réalisation qui suivent, donnés à titre indicatif et non limitatif à l'appui des figures annexées.

La figure 1 déjà décrite est une représentation schématique du principe de lecture d'une matrice active de bolomètres.

La figure 2 est une représentation schématique analogue de la figure 1, mais illustrant le principe général d'une unique structure de compensation.

La figure 3 représente une vue analogue à la figure 2 d'une forme de réalisation de l'invention, illustrant la source de courant et le miroir de courant différentiel de la structure de référence, et le miroir différentiel de la structure par colonne.

## DESCRIPTION DETAILLEE DE L'INVENTION

Dans la suite de la description, le même numéro de référence identifie des éléments identiques ou de même nature fonctionnelle lorsque cela peut s'appliquer.

De manière générale, et ainsi que déjà précisé, la matrice de détecteurs bolométriques est formée sur un substrat en silicium, dans lequel est réalisé le circuit de lecture. Ce substrat est traditionnellement recouvert, au niveau des structures actives, c'est à dire à l'aplomb de la zone optiquement sensible, d'une couche métallique réfléchissante. Cette dernière est destinée, de manière connue, à former une cavité quart-d'onde entre le substrat et les parties absorbantes du détecteur.

Les zones optiquement actives sont formées d'un pavage de membranes suspendues, comportant au dessus du circuit de lecture, un matériau bolométrique. Ces membranes sont supportées au moyen de structures essentiellement verticales, conductrices de l'électricité. Ces structures, réalisées à l'aide d'un matériau métallique, sont destinées en outre à amener les potentiels d'excitation générés par le circuit de lecture vers les parties conductrices, également dénommées électrodes, de la membrane de chaque détecteur bolométrique élémentaire, via des structures allongées, également conductrices électriquement, mais résistantes thermiquement.

Cette résistance thermique, dite aussi « isolation thermique », est destinée à permettre l'échauffement du bolomètre sous l'effet du rayonnement infra-rouge à détecter.

Le circuit de lecture applique de manière séquentielle un courant électrique qui traverse la structure suspendue. Ce courant circule à travers un matériau, dont la résistivité varie avec la température, qu'on appelle matériau bolométrique. Les matériaux les plus répandus pour cet usage sont l'oxyde de vanadium (formule générique $VO_x$) et le silicium amorphe (a-Si).

Cette matrice est pourvue d'une structure de compensation, destinée à dériver la majeure partie du courant électrique de mode commun traversant chacun des détecteurs bolométriques qui la constitue, et dont le principe est décrit en relation avec la figure 2.

Cette structure de compensation est unique pour l'intégralité de la matrice.

Selon un exemple de réalisation, cette structure unique de compensation **18** comporte un bolomètre de compensation **12,** aveugle, et plus précisément insensible au rayonnement infrarouge, de résistance $R_{comp}$, constitué par un seul ou plusieurs bolomètres élémentaires connectés ensemble. Une ligne d'alimentation électrique **13** (VSK) est connectée à l'une des bornes de ladite résistance $R_{comp}$. L'autre borne de ladite résistance est connectée à un transistor d'injection **14,** de telle sorte à imposer un courant de référence ($I_{ref}$) à travers la résistance $R_{comp}$ du bolomètre de compensation **12** via une tension de grille (GSK) appliquée sur la grille dudit transistor. Ce faisant, le bolomètre aveugle **12** est constamment polarisé à l'aide du transistor d'injection **14** piloté par la tension de grille (GSK).

Un convertisseur courant - tension **15** convertit le courant de référence ($I_{ref}$) en une tension de référence ($V_{ref}$).

Ce courant de référence ($I_{ref}$) est dupliqué pour chacune des colonnes au moyen d'un miroir de courant **16** disposé dans lesdites colonnes **5,** comportant chacun un convertisseur tension ($V_{ref}$) - courant ($I_{ref}$).

Les miroirs de courant sont bien connus de l'homme du métier, de sorte qu'il n'y a pas lieu de les décrire ici plus en détail. Il convient simplement de rappeler qu'un tel miroir de courant est un circuit particulier, en l'espèce constitué de transistors, permettant de refléter (dupliquer) le courant de référence ($I_{ref}$) en un courant de sortie, idéalement égal, et en tout cas proportionnel au courant de référence, indépendamment de la charge connectée au courant de sortie, et en l'espèce à l'intégrateur décrit ci-après.

En effet, un intégrateur de courant **19,** formé de l'amplificateur **11** et de la capacité **10,** est associé à chacune des colonnes **5** de la matrice. Celui-ci est destiné à intégrer la différence entre le courant traversant le bolomètre actif **2** de la ligne en cours de lecture et le courant de référence ($I_{ref}$), provenant du miroir de courant.

Le courant de référence ($I_{ref}$) est donc copié selon un courant $I_2$ dans toutes les colonnes de la matrice à l'aide du miroir de courant **16.** Chacune desdites colonnes dispose d'un miroir de courant supplémentaire **17** pour retourner le sens du courant $I_2$ vers un courant $I_3$ de compensation, afin de rendre le courant de référence ($I_{ref}$) compatible avec la structure d'intégration classiquement utilisée.

Il n'y a donc plus de bolomètres de compensation dans chacune des colonnes, mais un seul bolomètre de compensation pour toute la matrice.

Il convient de souligner que le miroir de courant **17** n'est nécessaire que si le bolomètre actif **2** est référencé à la masse du détecteur, condition non nécessaire au fonctionnement de celui-ci. Ainsi, il est possible de référencer le bolomètre actif **2** à la tension VSK ou tout autre potentiel supérieur à $V_{BUS}$ afin de supprimer le miroir de courant **17** en connectant directement le transistor du miroir de courant **16** à la colonne **5.**

Avec le dispositif particulier de cet exemple, on s'affranchit des dispersions liées aux bolomètres de compensation distribués. Ainsi, on observe la suppression de l'une des sources de dispersion colonnaire, constituant l'un des inconvénients des matrices de détection de l'état antérieur de la technique.

De plus, la suppression de tels bolomètres de compensation traditionnellement associés à chaque colonne permet de générer un gain de place conséquent en terme de surface de substrat consommée. Il est en effet rappelé que ces structures de compensation doivent présenter un niveau de bruit basse fréquence aussi modéré que possible pour ne pas nuire aux performances globales de l'imageur. Or, cet objectif exige le recours à un volume relativement élevé de matériau sensible pour l'élaboration de structures de compensation peu bruyantes, et donc corollairement, d'une surface conséquente, puisque les structures sont traditionnellement élaborées à partir de couches fines.

La forme de réalisation telle qu'illustrée au sein de la figure 2, peut présenter des limitations nées de la dispersion géométrique et technologique des multiples structures MOS qu'elle met en oeuvre. Le miroir de courant utilisé pour distribuer le courant sur chaque colonne ne saurait être apparié grâce aux techniques de dessin rapproché, connues de l'homme du métier, car la distance entre les deux branches dudit miroir de courant peut atteindre facilement plusieurs millimètres dans les applications courantes. Par ailleurs, dans le cadre de la distribution du courant par structure miroir, il est impossible d'exploiter les techniques connues de contre-réaction, car la branche de référence est commune à tous les miroirs.

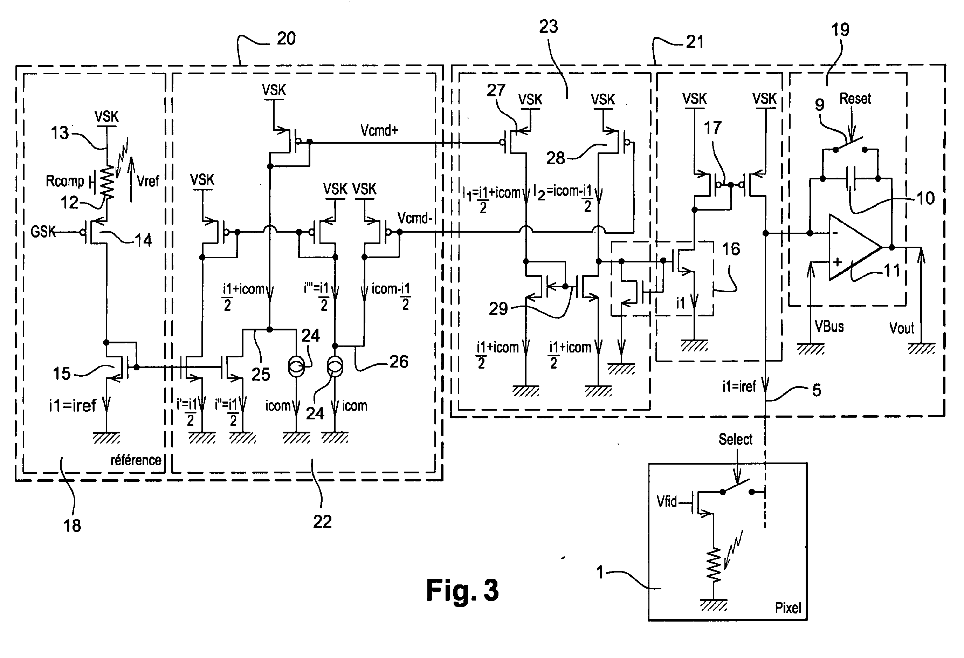

Afin de surmonter ces limitations, l'invention propose, dans le cadre d'une forme de réalisation de l'invention illustrée au sein de la figure 3, de mettre en oeuvre un miroir de courant à faible dispersion, et à cet effet, utilise un miroir différentiel.

Dans ce cadre, deux transistors proches peuvent être appariés grâce aux techniques de dessin connues et à un dimensionnement judicieux des transistors.

En l'espèce, la structure de compensation de référence **18** est conservée. Elle constitue la source de courant de référence il = Iref. Elle est associée à un convertisseur courant - tension différentielle **22,** comportant de manière connue, au moins un miroir de courant et des générateurs de courant.

Plus précisément, ce convertisseur comprend :

■ une source de courant de mode commun Icom **24 ;**
■ un additionneur de courant **25** assurant l'opération Icom + Iref/2 ;
■ un soustracteur de courant **26** assurant l'opération Icom - Iref/2.

Ce convertisseur assure alors la conversion courant - tension, de telle sorte à définir respectivement :

- ■ une tension de référence $V_{cmd+}$ correspondant au courant Icom + Iref/2 ;
- ■ une tension de référence $V_{cmd-}$ correspondant au courant Icom - Iref/2 ;

ces deux tensions de référence étant distribuées dans toutes les colonnes du détecteur.

Il est donc constitué une structure unique et commune à tout le détecteur, et identifiée par la référence **20**.

Chacune des colonnes comporte un convertisseur tension - courant **23,** comportant chacun :

- ■ deux convertisseurs tension - courant **27, 28,** assurant respectivement la conversion de la tension de référence $V_{cmd+}$ en un courant $I_1$ = Icom + Iref/2, et de la tension de référence $V_{cmd-}$ en un courant $I_2$ = Icom - Iref/2 ;
- ■ un soustracteur de courant **29** assurant l'opération $I_1 - I_2$.

Les détails de construction et les avantages inhérents aux miroirs de courant différentiels sont bien connus de l'homme du métier, de sorte qu'il n'y a pas lieu de les détailler davantage dans le cadre de la présente invention.

Le courant issu de ce convertisseur tension - courant **23** est dupliqué pour chacune des colonnes au moyen du miroir de courant **16** disposé également dans chacune desdites colonnes **5.** Ce faisant, le courant de référence ($I_{ref}$) est copié selon un courant il dans toutes les colonnes de la matrice à l'aide du miroir de courant **16.** Chacune desdites colonnes dispose d'un miroir de courant supplémentaire **17** pour retourner le sens du courant il vers un courant de compensation, afin de rendre le courant de référence ($I_{ref}$) compatible avec la structure d'intégration **19** précédemment décrite.

On constate que dans le cadre de cette forme particulière de réalisation, les transistors entrant dans la constitution de la structure unique de compensation **20** sont très proches les uns des autres, et peuvent donc facilement être appariés. De même, les transistors **27** et **28** sont disposés dans chaque colonne, et peuvent donc également être appariés. En revanche, ces derniers ne peuvent être appariés aux transistors de la structure **20.** Le fait de travailler non pas avec une tension Vref unique, mais avec une double tension Vcmd+/Vcmd- différentielle, permet de limiter substantiellement l'influence de dispersions spatiales des structures électroniques élémentaires (MOS) distribuées dans chaque colonne, en particulier en termes de dispersion de tension de seuil. Ce faisant, on gagne en précision par rapport à la forme de réalisation de la figure 2, dans la mesure où dans cette dernière, il n'est pas possible d'apparier les transistors **15** et **16,** ce dernier étant distribué par colonne.

Quel que soit le mode de réalisation retenu, on supprime le bolomètre de compensation de chaque colonne. Ce faisant, on supprime également le bruit en 1/f qu'il génère dans les structures classiques de détection, telles qu'illustrées en relation avec la figure 1.

Certes, le bruit en 1/f est toujours présent lors du fonctionnement du bolomètre unique de compensation mis en oeuvre dans l'invention, mais d'une part ce bruit peut aisément être réduit à quantité négligeable par la mise en oeuvre d'un volume de matériau bolométrique suffisamment élevé, au prix d'une surface de substrat consommée très réduite par rapport à la surface totale de l'imageur.

En outre, cette surface consommée demeure de toutes façons tout à fait négligeable au regard de ce qu'exige la construction des structures bolométriques de compensation disposées dans chaque colonne dans les structures de l'état antérieur de la technique de la figure 1.

Au surplus, son effet s'applique à tous les pixels de la matrice et non plus de manière décorrélée entre colonnes, l'effet résiduel éventuel étant beaucoup moins préjudiciable.

Enfin, le bruit en 1/f ramené par les miroirs de courant, peut être minimisé à l'aide de techniques connues de l'homme du métier.

Ainsi, l'invention trouve tout particulièrement application dans le domaine des capteurs d'image à détection bolométrique, quelle que soit la bande optique de détection et le type de capteur bolométrique mis en oeuvre (notamment mais non limitativement à base de silicium amorphe (a-Si), d'oxydes de vanadium (Vox), de métaux (Ti)).

En outre, en raison de sa capacité d'adaptation à différentes températures de fonctionnement, l'invention s'applique aussi bien aux capteurs régulés thermiquement qu'aux capteurs opérant à température de plan focal variable.

De plus, la capacité intrinsèque de faible bruit basse-fréquence en colonne permet d'intégrer les détecteurs réalisés selon l'invention dans des caméras qui seraient dépourvues d'obturateur (ou selon l'expression anglo-saxonne *« shutter »*).

Mais bien entendu, l'invention reste parfaitement compatible avec les caméras traditionnelles munies d'un tel obturateur. Ce faisant, on aboutit à une diminution sensible du coût de fabrication de telles caméras, ainsi qu'à une simplification de leur mise en oeuvre par l'utilisateur.

**Revendications**

1. Dispositif de détection de rayonnement infrarouge comprenant :

   • une matrice de détecteurs bolométriques sensibles au rayonnement incident dits « actifs » (2) formés au dessus d'un substrat ;
   • un circuit de lecture à adressage séquentiel de chacune des lignes de détecteurs de ladite matrice, le circuit de lecture étant réalisé dans le substrat et comportant:

   ○ pour chaque colonne de ladite matrice, des moyens (16, 17, 18 ; 18, 20, 21) de production d'un courant de référence (Iref);
   ○ pour chaque colonne de ladite matrice, un intégrateur (19) pour intégrer la différence entre le courant traversant un bolomètre actif de la colonne et le courant de référence ; et
   ○ des moyens commandant :

   ■ la sélection d'une ligne de bolomètres actifs de la matrice ;
   ■ la polarisation simultanée des bolomètres actifs de la ligne sélectionnée ;
   ■ la production simultanée des courants de référence (Iref) pour les colonnes de la matrice ; et
   ■ l'intégration simultanée des différences entre les courants circulants dans les bolomètres actifs de la ligne sélectionnée et les courants de référence (Iref),

   **caractérisé en ce que** les moyens de production d'un courant de référence par colonne de la matrice de bolomètres actifs comportent :

   • des moyens (18) de production d'un unique courant de référence ($I_{ref}$) pour toutes les colonnes de la matrice de bolomètres actifs à partir d'un unique bolomètre insensible au rayonnement, dit « aveugle » (12), formé au dessus du substrat ; et
   • des moyens (17, 18 ; 18, 20, 21) de copie simultanée pour chaque colonne de la matrice dudit courant de référence ($I_{ref}$), constitués par des miroirs de courant (16) disposés dans chacune desdites colonnes, lesdits miroirs comportant chacun un convertisseur tension - courant, le miroir de courant mis en oeuvre dans chacune des colonnes étant un miroir de courant différentiel.

2. Dispositif de détection de rayonnement infrarouge selon la revendication 1, **caractérisé en ce que** les moyens de production du courant de référence ($I_{ref}$) comportent :

   • une ligne d'alimentation (13) connectée à l'une des bornes dudit bolomètre aveugle (12) ;
   • un transistor d'injection (14), connecté à l'autre borne dudit bolomètre aveugle (12), de manière à imposer le courant de référence ($I_{ref}$) via une tension appliquée sur sa grille ;
   • un convertisseur courant - tension (15) convertissant ledit courant de référence ($I_{ref}$) en une tension de référence.

3. Dispositif de détection de rayonnement infrarouge selon l'une des revendications 1 et 2, **caractérisé en ce que** le bolomètre aveugle (12) est constitué d'un ou plusieurs bolomètres aveugles élémentaires connectés ensemble.

**Claims**

1. A device for detecting infrared radiation comprising :

   • an array of bolometric detectors which are sensitive to the incident radiation and are referred to as "active" (2) formed above a substrate ;
   • a read circuit produced for sequentially addressing each of the columns of detectors of said array, said circuit being formed in said substrate and comprising :

   - for each column of said array, means (16, 17, 18 ; 18, 20, 21) for producing a reference current (Iref) ;
   - for each column of said array, an integrator (19) designed to integrate the difference between the current flowing through the active bolometer of the column the reference current ; and
   - means for ordering :

■ the selection of one row of active bolometers of the array ;
■ the simultaneous biasing of the active bolometers of the selected row ;
■ the simultaneous production of reference currents (Iref) for the columns of the array;
■ the simultaneous integration of the differences between the currents flowing through the active bolometers of the selected row and the reference currents (Iref) ;

**characterized in that** the means for producing a reference current for each column of the array of active bolometers comprise :

• means (18) for producing a unique reference current (Iref) for all the columns of the array of active bolometers from a unique bolometer which is insensitive to the radiation and referred to as "blind" (12), formed above the substrate ;
• means (17, 18 ; 18, 20, 21) of simultaneously copying for each column of the array said reference current ($I_{ref}$) consisting of current mirrors (16) located in each of said columns, said mirrors each comprising a voltage-to-current converter, the current mirror implemented in each column being a differential current mirror.

2. A device for detecting infrared radiation as claimed in claim 1, **characterized in that** the means of producing the reference current ($I_{ref}$) comprise:

• a power supply line (13) connected to one of the terminals of said blind bolometer (12);
• a charge injection transistor (14) connected to the other terminal of said blind bolometer (12) so as to impose the reference current ($I_{ref}$) through a voltage applied to its gate;
• a current-to-voltage converter (15) which converts said reference current ($I_{ref}$) to a reference voltage.

3. A device for detecting electromagnetic radiation as claimed in any of claims 1 and 2, **characterized in that** the blind bolometer (12) consists of one or more elementary blind bolometers connected to each other.

**Patentansprüche**

1. Vorrichtung zum Erfassen einer Infrarotstrahlung mit:

• einer Matrix aus gegenüber einfallender Strahlung empfindlichen, so genannten "aktiven" bolometrischen Detektoren (2), die über einem Substrat gebildet sind;
• einer Leseschaltung mit sequentieller Adressierung der jeweiligen Detektorenzeile der Matrix, wobei die Leseschaltung in dem Substrat ausgebildet ist und Folgendes umfasst:

○ für jede Spalte der Matrix Mittel (16, 17, 18; 18, 20, 21), um einen Referenzstrom ($I_{ref}$) zu erzeugen,
○ für jede Spalte der Matrix einen Integrator (19), um die Differenz zwischen dem Strom, der ein aktives Bolometer der Spalte durchfließt, und dem Referenzstrom zu integrieren, und
○ Mittel für die Steuerung

■ der Auswahl einer Zeile aktiver Bolometer der Matrix,
■ der gleichzeitigem Polarisierung der aktiven Bolometer der ausgewählten Zeile,
■ der gleichzeitigen Erzeugung der Referenzströme ($I_{ref}$) für die Matrixspalten und
■ der gleichzeitigen Integration der Differenzen zwischen den Strömen, welche die aktiven Bolometer der ausgewählten Zeile durchfließen, und den Referenzströmen ($I_{ref}$),

**dadurch gekennzeichnet, dass** die Mittel für die Erzeugung eines Referenzstroms für jede Spalte der Matrix aus aktiven Bolometern Folgendes umfassen:

• Mittel (18), um einen einzigen Referenzstrom ($I_{ref}$) für alle Spalten der Matrix aus aktiven Bolometern von einem einzigen strahlungsunempfindlichen, als "blind" bezeichneten, über dem Substrat ausgebildeten Bolometer (12) aus zu erzeugen, und
• Mittel (17, 18; 18, 20, 21), um für jede Spalte der Matrix den Referenzstrom ($I_{ref}$) gleichzeitig zu kopieren, welche durch Stromspiegel (16) gebildet sind, die in den jeweiligen Spalten angeordnet sind, wobei die Spiegel jeweils einen Spannung-Strom-Wandler aufweisen, wobei der in der jeweiligen Spalte eingesetzte Stromspiegel ein Differenzstromspiegel ist.

**2.** Vorrichtung zum Erfassen einer Infrarotstrahlung nach Anspruch 1, **dadurch gekennzeichnet, dass** die Mittel zum Erzeugen des Referenzstroms ($I_{ref}$) Folgendes umfassen:

  • eine Versorgungsleitung (13), die an eine der Klemmen des blinden Bolometers (12) angeschlossen ist,
  • einen Injektionstransistor (14), der derart an die andere Klemme des blinden Bolometers (12) angeschlossen ist, dass der Referenzstrom ($I_{ref}$) über eine an sein Gitter angelegte Spannung eingeprägt wird,
  • einen Strom-Spannung-Wandler (15), der den Referenzstrom ($I_{ref}$) in eine Referenzspannung umwandelt.

**3.** Vorrichtung zum Erfassen einer Infrarotstrahlung nach einem der Ansprüche 1 und 2, **dadurch gekennzeichnet, dass** das blinde Bolometer (12) durch ein oder mehrere blinde, miteinander verbundene Elementarbolometer gebildet ist.

Fig. 1

Fig. 2

**Fig. 3**

EP 2 012 100 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1117250 A

**Littérature non-brevet citée dans la description**

- **E. MOTTIN ET.** Uncooled amorphous silicon technology enhancement for 25 μm pixel pitch achievement. *Infrared Technology and Applications XXVIII, SPIE,* vol. 4820
- **B. FIEQUE et al.** 320 x 240 uncooled microbolometer 2D array for radiometric and process control applications. *Optical Systems Design Conference, SPIE 5251*

- **C. TROUILLEAU et al.** Low cost amorphous silicon based 160 x 120 uncooled microbolometer 2D array for high volume applications. *Optical Systems Design Conference SPIE 5251-16*
- **TROUILLEAU et al.** 35 μm pitch at ULIS, a breaktrough. *SPIE,* 2005, vol. 5783